# EUROPEAN PATENT APPLICATION

(11) **EP 4 636 165 A1**
(43) Date of publication of application: **22.10.2025**
(21) Application number: 22968451.9
(22) Date of filing: 14.12.2022
(51) Int. Cl.: E02D 27/44, F16M 7/00

(54) **3-POINT SUPPORT ANCHOR-INTEGRATED LINER, LONG ANCHOR-INTEGRATED LINER, AND EQUIPMENT INSTALLATION METHOD**

(71) Applicant: Suehiro-System Co., Ltd., Osaka-city, Osaka 541-0046 (JP)
(72) Inventor: SUEHIRO, Morio, Osaka-city, Osaka 541-0046 (JP); SUEHIRO, Hiroyuki, Sanda city, Hyogo 669-1531 (JP)
(74) Representative: Lambacher, Michael
(86) International application number: PCT/JP2022/045972
(87) International publication number: WO 2024/127539

(57) **Abstract**

[Problem]

To provide a three-point supporting anchor integrated liner and a long anchor integrated liner that allows positioning machine accessory anchor bolts before machine foundation reinforced concrete for installing a machine is assembled and poured.

[Solution]

A three-point supporting anchor integrated liner (10) has one end secured to a slab (1) under machine foundation reinforced concrete (2) and another end including a screw portion (13a) and a liner portion (13b). The screw portion has a diameter larger than a shaft diameter and projecting to an upper surface of the machine foundation reinforced concrete. The liner portion is screwed with the screw portion to form a mounting surface for a plate having an upper surface on which a machine is installed or for the machine and allowing adjustment of an installation height of the plate or the machine. The three-point supporting anchor integrated liner includes: a first shaft (12) that is longer than a height difference dimension between a top rebar of a foundation reinforcement cage buried in the machine foundation reinforced concrete and a slab top; a second shaft (14) that extends in a direction intersecting with the first shaft and allows both ends to intersect with and be tied to a rebar; and a coupling portion (16) that ties the second shaft or couples the second shaft by screwing to the first shaft in a state where the second shaft intersects with the first shaft.

## Description

### TECHNICAL FIELD

The present invention relates to an anchor integrated liner (a combination of taper liners and flat liners) and a machine installation method that performs accurate position adjustment of a base plate of machinery and equipment (hereinafter simply referred to as a machine in some cases) which is installed on machine foundation reinforced concrete, a temporary template, or the machinery and equipment itself. The base plate is referred to as a sole plate when it is for a large-sized pump base. The temporary template is a plate made in the shape of a machine base back surface. Hereinafter, the base plate and the temporary template are simply referred to as a plate in some cases.

### BACKGROUND ART

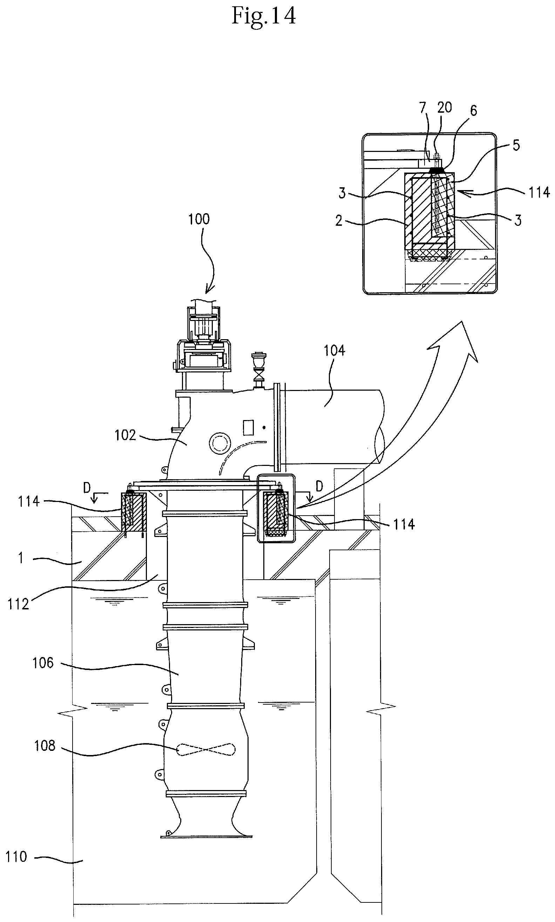

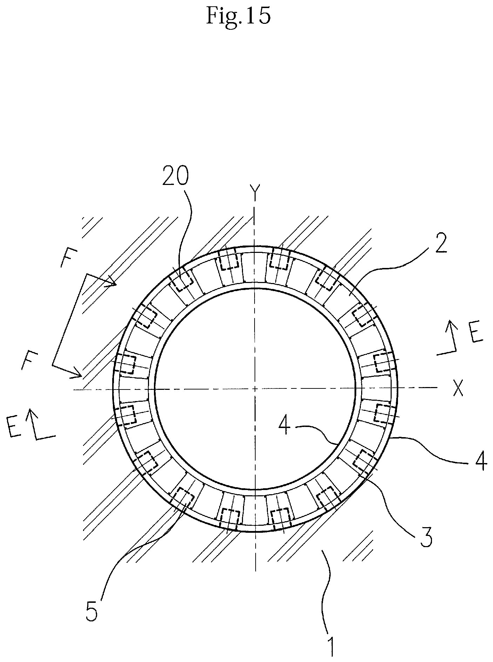

Fig. 14 is an installation side view of a large-sized lifting pump. As illustrated, a large-sized lifting pump 100 includes a pump body 102, a discharge pipe 104, a lifting pipe 106, and an impeller 108, pumps water in a water tank 110, and discharges it to an outside. The large-sized lifting pump 100 must be installed with high accuracy (0.01 mm to 0.001 mm) in horizontal and vertical states on a machine foundation 114 disposed around an opening 112 of a slab 1 on an upper surface of the water tank 110. Conventional adjustment in a horizontal direction has been performed using a push bolt jig, and that in a vertical direction has been performed using taper liners, flat liners, and, by this applicant, anchor integrated liners (Patent Documents 1 and 2). Fig. 15 to Fig. 23 are explanatory views of a conventional machine installation method. The following describes the conventional machine installation method of a large-sized pump and the like.

### (Foundation Work)

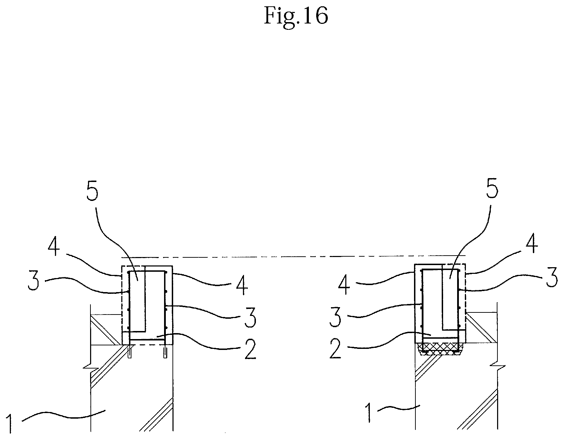

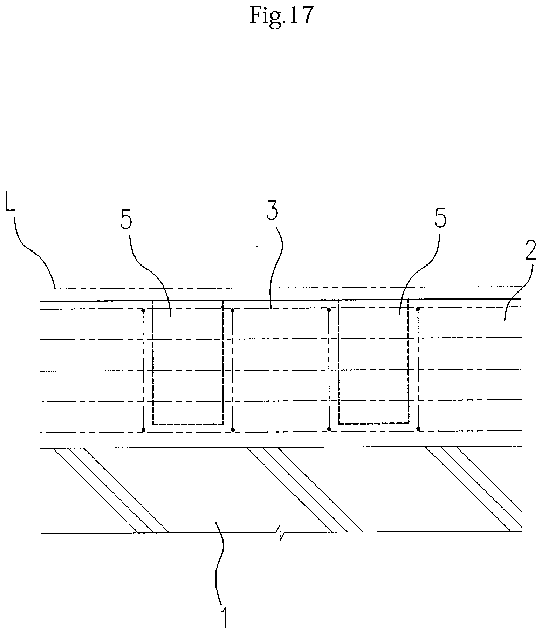

Fig. 15 is a plan view of machine foundation reinforced concrete for a conventional large-sized lifting pump foundation work viewed from an arrow direction D-D of Fig. 14. Fig. 16 is a cross-sectional view viewed from an arrow direction E-E of Fig. 15. Fig. 17 is a side view viewed from an arrow direction F-F of Fig. 15 (excluding formworks 4).
1. For assembling and pouring a machine foundation reinforced concrete 2, reference lines (an X-direction and a Y-direction) on planes of the machine foundation reinforced concrete 2 are marked (scribed) on the slab 1 (also referred to as an existing building frame), and plane dimensions of a foundation are scribed. A Z-direction, which is a height dimension of the foundation, is scribed as a secondary reference line on nearby walls, pillars, and the like. X- and Y-positions of anchor bolts 20 (also referred to as machine anchor bolts) positions are marked. The height (Z-direction) of the anchor bolts 20 may be scribed on nearby walls, pillars, and the like (See Fig. 15). In addition, plane positions of rebars 3 are scribed on the slab 1.
2. Joint bars (Z-direction) are constructed. As the joint bars (Z-direction), foundation rebars are tied by excavating building frame rebars in some cases (see a right cross section of Fig. 16), or rebars 3 are hammered into the slab 1 as post-construction anchors (see a left cross section of Fig. 16). Bars arranged in the X-direction, the Y-direction, and the Z-direction are assembled by entangling the bars with the joint bars.
3. The formworks 4 (same as box-out holes 5) in Fig. 16 are mounted. The box-out holes 5 are filled with styrene foam or the like. The formworks 4 are mounted as anchor box-out holes (See Fig. 16).
4. The machine foundation reinforced concrete 2 in Fig. 15 is assembled and poured excluding box-out hole portions. The concrete is assembled and poured below a height L of the foundation (see Fig. 17) by the amount of foundation grout (50 mm to 70 mm). Curing is allowed for 28 days until the concrete solidifies.

### (Box-out Hole)

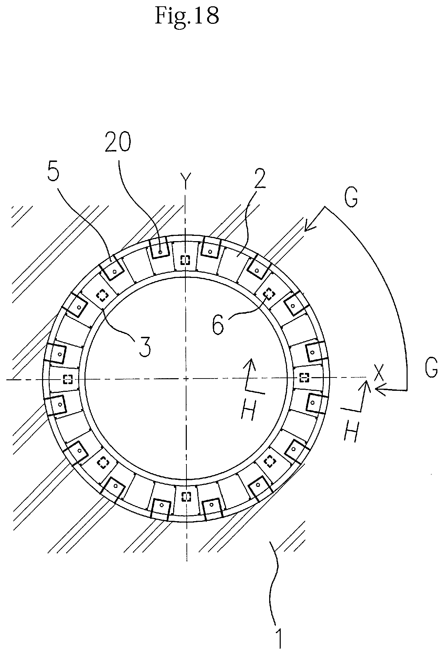

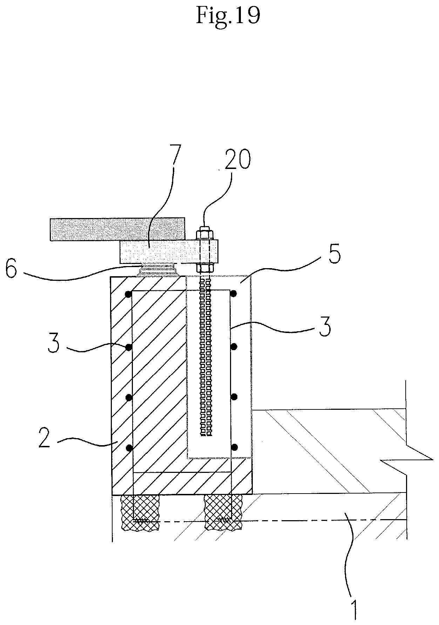

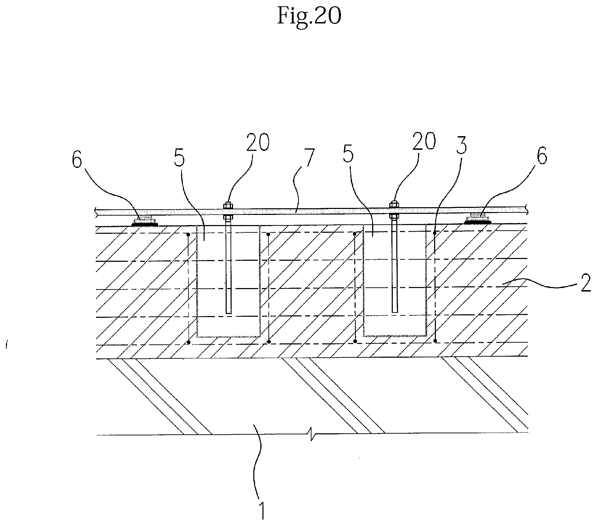

Fig. 18 is a plan view of machine foundation reinforced concrete when conventional box-out holes are provided. Fig. 19 is a cross-sectional view viewed from an arrow direction H-H of Fig. 18. Fig. 20 is a side view viewed from an arrow direction G-G of Fig. 18 (excluding the formworks 4).
5. Styrene foam or the like in the box-out holes 5 is removed to create spaces in which the anchor bolts 20 are mounted. Reference lines are marked on an upper surface of the formed machine foundation reinforced concrete 2 (the X-direction and the Y-direction). The anchor bolts 20 are positioned on the machine foundation reinforced concrete 2 (the X-direction and the Y-direction, see Fig. 18). Confirmation is performed to see that the box-out hole positions allow the anchor bolts 20 to fit sufficiently.
6. Temporary liners 6 (flat liners, taper liners, or anchor integrated liners) for primary centering or packers are mounted on the upper surface of the machine foundation reinforced concrete 2.
7. A plate 7 (an upper side is a base plate for the machine, and a lower side is a sole plate (with anchor bolt mounting holes)) is placed and installed on the temporary liners 6, and (primary) centering is performed (the X-, Y-, and Z-directions). The machinery accessory anchor bolt 20 is secured to the plate 7 by tightening nuts from front and back sides (See Figs. 19 and 20).
8. The box-out holes 5 are filled with concrete or mortar. Twenty-eight days of curing is required until the concrete solidifies. Alternatively, non-shrinkable mortar is used to shorten the period or to ensure concrete strength in some cases. In this case, three days are required for the curing period. Securing of the anchor bolts 20 is completed.

### (Centering of Machine)

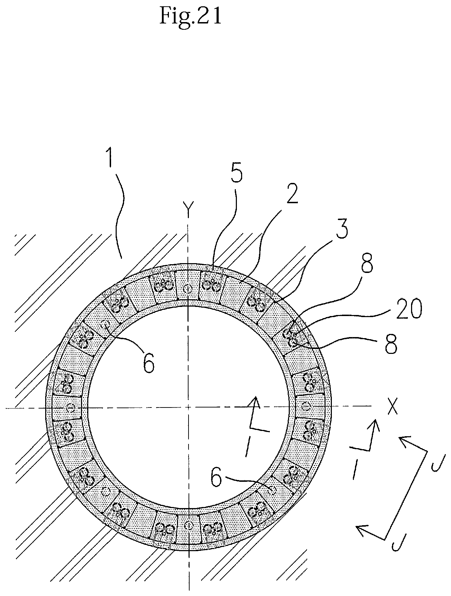

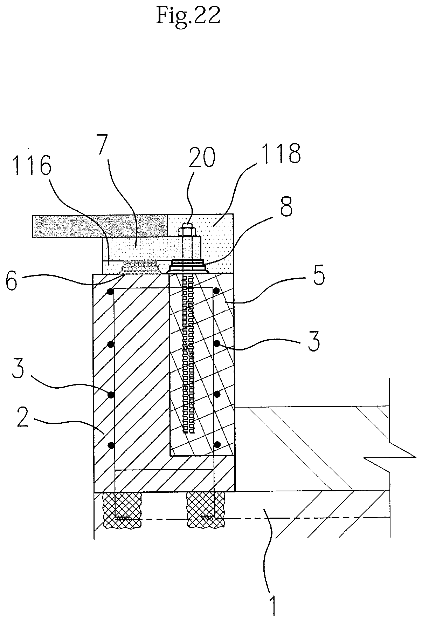

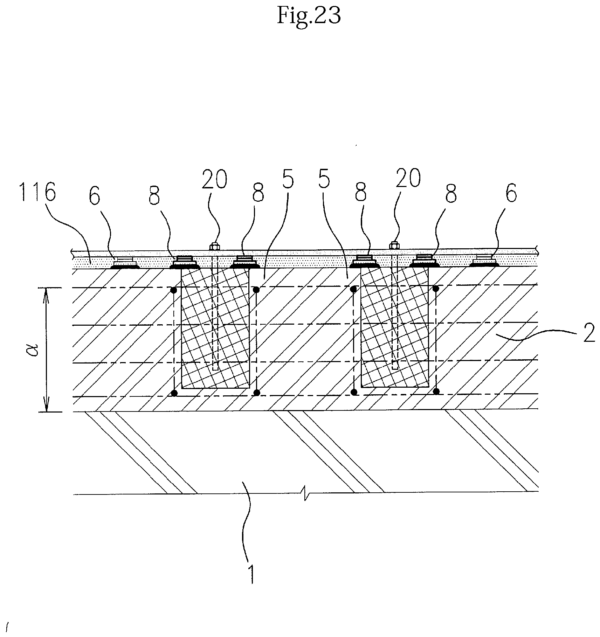

Fig. 21 is a plan view of machine foundation reinforced concrete for conventional centering of a machine. Fig. 22 is a cross-sectional view viewed from an arrow direction I-I of Fig. 21. Fig. 23 is a side view viewed from an arrow direction J-J of Fig. 21.
9. Permanent liners 8 (combinations of flat liners and taper liners or anchor integrated liners) are placed at both sides in a circumferential direction (concentric circle centered in the X- and Y-directions) of the anchor bolts 20 (see Fig. 21). A pump is installed, and (secondary) centering is performed by adjusting the permanent liners 8. Adjustment with shims is performed. The permanent liners 8 are spot-welded and secured.
10. Grouting is performed. A foundation grout 116 is secured on a lower surface and at a peripheral area of the plate 7 with non-shrinkable mortar or mortar (see Fig. 23). A mortar finish 118 is applied around the machine foundation reinforced concrete 2 (see Fig. 22).

In the conventional machine installation method, it was not possible to place temporary liners until after machine foundation reinforced concrete was assembled and poured, and anchor bolts for permanent installation could not be positioned. In addition, final centering could not be performed without filling box-out holes with concrete and securing the anchor bolts for permanent installation with the concrete. In view of this, a work period from the start of foundation work to the completion of machine centering work was prolonged.

Additionally, the reference lines must be marked on the upper surface of the machine foundation reinforced concrete again after the entire positioning is performed on the upper surface of a slab and the machine foundation reinforced concrete is assembled and poured. This made the marking work to be duplicated efforts, and the marking work had to be inspected each time to proceed with process. Therefore, the work period was prolonged.

Furthermore, at the time of secondary centering for installing a machine, in addition to adjustment with permanent liners, subtle adjustment work using shims was required. Therefore, the work became complicated, and the work period was prolonged. Shortening the work period by installing the anchor integrated liners disclosed in Patent Documents 1 and 2 is also to shorten the period of the conventional centering work process. The shortened period is from four hours to 72 hours. It was a major object for construction workers to further shorten the period required from the foundation work to the completion of the machine installation by about one month or more.

### Citation List

### Patent Literature

Patent Document 1: Japanese Patent No. 3775717
Patent Document 2: Japanese Patent No. 4065957

### Non-Patent Literature

Non-Patent Document 1: Written and edited by Japan Sewage Works Agency, Issued by Sewerage Business Management Centre, "Companion to Mechanical and Equipment Construction, Work Management Record (Main Volume) 2021", Chapter 3, Main Pump Equipment, P12 to P21

### DISCLOSURE OF THE INVENTION

### PROBLEMS TO BE SOLVED BY THE INVENTION

In consideration of the problem described above, the object to be achieved by the present invention is to provide a three-point supporting anchor integrated liner and a long anchor integrated liner that allows positioning and mounting machine accessory anchor bolts before machine foundation reinforced concrete for installing a machine is assembled and poured.

In addition, the present invention has an object to provide a machine installation method that can significantly shorten the process from assembling and pouring of machine foundation reinforced concrete to installation work of a machine.

### SOLUTIONS TO THE PROBLEMS

The present invention provides a three-point supporting anchor integrated liner as first means to solve the above problem. The three-point supporting anchor integrated liner has one end secured to a slab under machine foundation reinforced concrete and another end including a screw portion and a liner portion. The screw portion has a diameter larger than a shaft diameter and projecting to an upper surface of the machine foundation reinforced concrete. The liner portion is screwed with the screw portion to form a mounting surface for a plate having an upper surface on which a machine is installed or for the machine and allowing adjustment of an installation height of the plate or the machine. The three-point supporting anchor integrated liner includes a first shaft, a second shaft, and a coupling portion. The first shaft is longer than a height difference dimension between a top rebar of a foundation reinforcement cage buried in the machine foundation reinforced concrete and a slab top. The second shaft extends in a direction intersecting with the first shaft and allows both ends to intersect with and be tied to the foundation reinforcement cage. The coupling portion couples the second shaft to the first shaft in a state where the second shaft intersects with the first shaft.

With the above first means, the plate or the machine can be arranged, and the anchor bolts can be positioned before assembling and pouring the machine foundation reinforced concrete, and therefore, the process of machine installation can be significantly shortened.

The present invention provides a three-point supporting anchor integrated liner as second means to solve the above problem. In the three-point supporting anchor integrated liner in the first means, one or more of the second shafts are mounted to the first shaft and supported by the coupling portion to move up and down along a longitudinal direction of the first shaft and be able to move in a left and right direction with the first shaft as a center.

With the above second means, both ends of the second shaft are caused to come close to a rebar and can be tied to the rebar. Coupling of the first shaft and the second shaft is performed by being tied in some cases.

The present invention provides a machine installation method as third means to solve the above problem. The machine installation method is for assembling and pouring machine foundation reinforced concrete on a slab to install a machine to a machine accessory anchor bolt buried in the machine foundation reinforced concrete. The machine installation method includes: a step of securing the first shaft of the three-point supporting anchor integrated liner according to claim 1 or 2 for temporary centering at a position away from a box-out hole, the anchor bolt being arranged in the box-out hole, the anchor bolt being in the slab before assembling and pouring the machine foundation reinforced concrete; a step of allowing both ends of the second shaft to intersect with and be tied to a rebar of the machine foundation reinforced concrete; a step of arranging a plate or the machine on a liner of the three-point supporting anchor integrated liner and temporarily mounting the anchor bolt in a box-out hole space for centering; a step of mounting a box-out hole so as to surround the anchor bolt; a step of assembling and pouring the machine foundation reinforced concrete on the slab; and a step of performing primary centering of the plate or the machine with the liner portion of the three-point supporting anchor integrated liner.

With the above third means, the plate or the machine, the anchor bolts, and the three-point supporting anchor integrated liners for temporary centering can be placed before assembling and pouring the machine foundation reinforced concrete, and the process can be significantly shortened.

The present invention provides a machine installation method as fourth means to solve the above problem. The method is for assembling and pouring machine foundation reinforced concrete on a slab to install a machine to a machine accessory anchor bolt buried in the machine foundation reinforced concrete. The machine installation method includes: a step of securing the first shaft of the three-point supporting anchor integrated liner according to claim 1 or 2 for final centering near an installation position of the anchor bolt in the slab before assembling and pouring the machine foundation reinforced concrete; a step of allowing both ends of the second shaft to intersect with and be tied to a rebar of the machine foundation reinforced concrete; a step of arranging the plate or the machine on a liner of the three-point supporting anchor integrated liner and mounting the anchor bolt; a step of assembling and pouring the machine foundation reinforced concrete on the slab and burying the anchor bolt and the three-point supporting anchor integrated liner; and a step of performing primary centering and secondary centering of the plate or the machine with the liner portion of the three-point supporting anchor integrated liner.

With the above fourth means, the plate or the machine, the anchor bolts, and the three-point supporting anchor integrated liners for final centering can be placed before assembling and pouring the machine foundation reinforced concrete, and the process can be significantly shortened. It is not necessary to provide the box-out holes by the conventional construction method, and significant shortening of the process can be achieved.

The present invention provides a machine installation method as fifth means to solve the above problem. The machine installation method, which is in the third means or the fourth means, includes a step of fitting and mounting a centering nut when the anchor bolt is mounted to an anchor bolt mounting hole of the plate, the centering nut having an outer diameter with a gap relative to a hole diameter of the anchor bolt mounting hole of 1 mm or less.

The above fifth means can minimize the gap in the anchor bolt mounting hole, enabling accurate mounting of the anchor bolt in the X- and Y-directions.

The present invention provides a machine installation method as sixth means to solve the above problem. The machine installation method, which is in the third means, includes a step of mounting a final centering anchor integrated liner (conventional type) on a lower surface of the plate or the machine with a magnet at both sides of the anchor bolt mounted in the box-out hole space.

With the above sixth means, in the space of the box-out hole, by a simple action of attaching the magnets to the back surface (made of iron) of the plate or the machine, the conventional anchor integrated liner can be easily secured there.

The present invention provides a machine installation method as seventh means to solve the above problem. The machine installation method, which is in the fourth means or sixth means, includes a step of arranging slide paper between a surface of the liner portion of the three-point supporting anchor integrated liner or the final centering anchor integrated liner and the plate or the machine and performing primary or secondary centering of the machine mounted on the plate or the machine with the liner portion.

With the above seventh means, using overlapped sliding surfaces greatly reduces sliding resistance, facilitating adjustment work (fine adjustment movement in the X- and Y-directions and fine movement in the Z-direction by rotation) for the centering of a heavy object. In addition, since the secondary centering work can be conducted with the same three-point supporting anchor integrated liners, conventional complicated shim adjustment work using several types of shim plates is no longer required, enabling efficient work in a short period.

The present invention provides a long anchor integrated liner as eighth means to solve the above problem. The long anchor integrated liner has one end secured to a slab under machine foundation reinforced concrete and another end including a screw portion and a liner portion. The screw portion projecting to an upper surface of the machine foundation reinforced concrete. The liner portion is screwed with the screw portion to form a mounting surface for a plate having an upper surface on which a machine is installed or for the machine and allowing adjustment of an installation height of the plate or the machine. The long anchor integrated liner includes a first shaft longer than a height difference dimension between a top rebar of a foundation reinforcement cage buried in the machine foundation reinforced concrete and a slab top, the first shaft having a shaft diameter of 24% or more of a diameter of the liner portion.

With the eighth means, the plate or the machine can be arranged, and the anchor bolts can be positioned before assembling and pouring the machine foundation reinforced concrete, and therefore, the process of machine installation can be significantly shortened.

### EFFECTS OF THE INVENTION

With the present invention, anchor bolts can be positioned before machine foundation reinforced concrete is assembled and poured, the number of marking work is reduced, the work of creating box-out holes is eliminated, concrete filling work is eliminated, a curing period after concrete assembling and pouring can be omitted, shim adjustment can be omitted, and quality inspection for each step can be omitted. Therefore, the process of machine installation can be significantly shortened.

### BRIEF DESCRIPTION OF THE DRAWINGS

Fig. 1 is a front view of a three-point supporting anchor integrated liner of the present invention.
Fig. 2 is an installation drawing of the three-point supporting anchor integrated liner.
Fig. 3 is a perspective view of the three-point supporting anchor integrated liner tied to rebars.
Fig. 4 is an explanatory view of a centering nut.
Fig. 5 is a plan view of machine foundation reinforced concrete with box-out holes.
Fig. 6 is a cross-sectional view viewed from an arrow direction A-A of Fig. 5 with the box-out holes.
Fig. 7 is a side view viewed from an arrow direction B-B of Fig. 5 with the box-out holes.
Fig. 8 is a cross-sectional view viewed from an arrow direction A1-A1 of Fig. 5 with concrete poured in the box-out holes.
Fig. 9 is a side view viewed from the arrow direction B-B of Fig. 5 with concrete poured in the box-out holes.
Fig. 10 is a plan view of machine foundation reinforced concrete without box-out holes.
Fig. 11 is a side view viewed from an arrow direction C-C of Fig. 10 before the machine foundation concrete is poured.
Fig. 12 is a side view viewed from the arrow direction C-C of Fig. 10 after the foundation concrete is poured.
Fig. 13 is a side view viewed from the arrow direction C-C of Fig. 10 after foundation grouting.
Fig. 14 is an installation side view of a large-sized lifting pump.
Fig. 15 is a plan view of machine foundation reinforced concrete for a conventional large-sized lifting pump foundation work viewed from an arrow direction D-D of Fig. 14.
Fig. 16 is a cross-sectional view viewed from an arrow direction E-E of Fig. 15.
Fig. 17 is a side view viewed from an arrow direction F-F of Fig. 15.
Fig. 18 is a plan view of machine foundation reinforced concrete when conventional box-out holes are provided.
Fig. 19 is a cross-sectional view viewed from an arrow direction H-H of Fig. 18.
Fig. 20 is a side view viewed from an arrow direction G-G of Fig. 18.
Fig. 21 is a plan view of machine foundation reinforced concrete for conventional centering of a machine.
Fig. 22 is a cross-sectional view viewed from an arrow direction I-I of Fig. 21.
Fig. 23 is a side view viewed from an arrow direction J-J of Fig. 21.
Fig. 24 is a front view of a long anchor integrated liner of the present invention.
Fig. 25 is an installation drawing of the long anchor integrated liner.

### DESCRIPTION OF PREFERRED EMBODIMENTS

The following describes embodiments of a three-point supporting anchor integrated liner 10, a long anchor integrated liner, and a machine installation method of the present invention in detail with reference to the drawings.

In the embodiments, a lateral direction and a longitudinal direction of a slab surface on which a machine is installed are defined as the X-direction and the Y-direction, and a height direction from the slab surface is defined as the Z-direction for the following description.

### [Three-Point Supporting Anchor Integrated Liner 10]

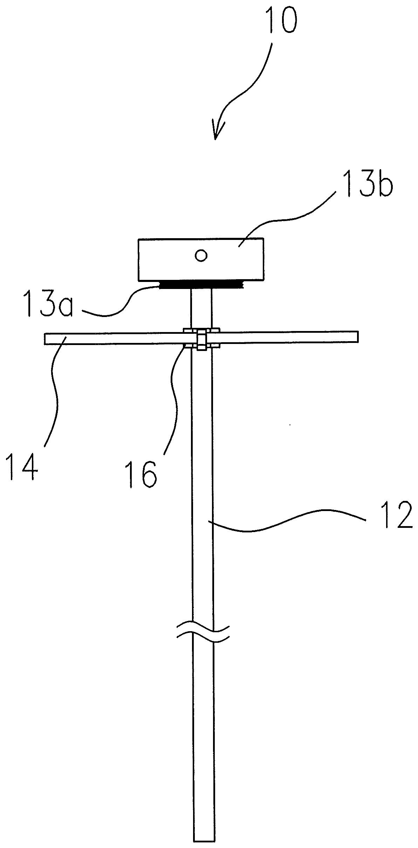

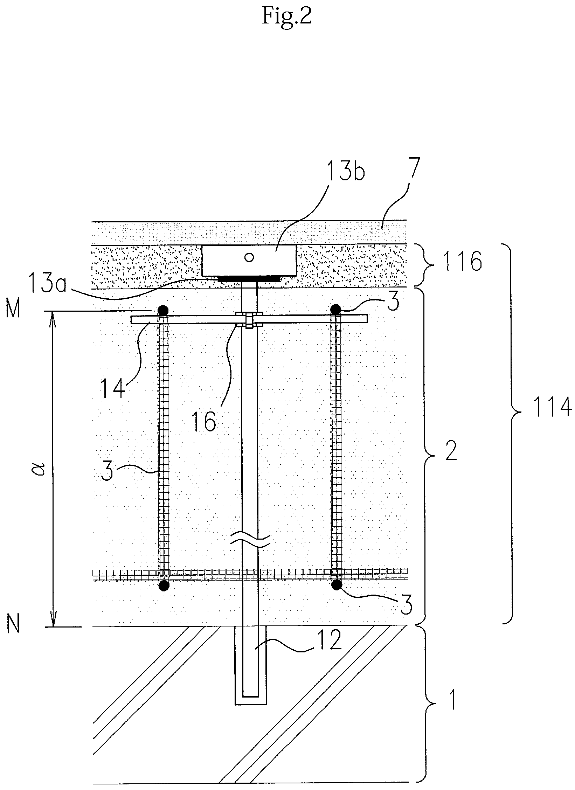

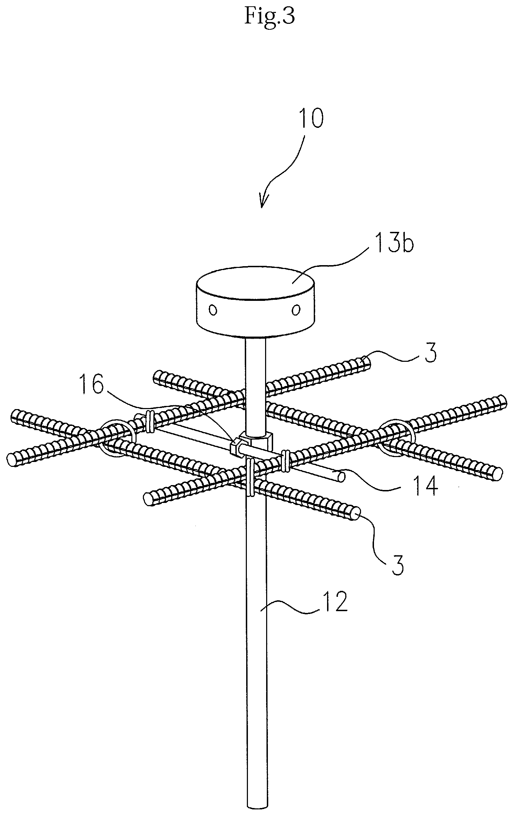

Fig. 1 is a front view of a three-point supporting anchor integrated liner of the present invention. Fig. 2 is an installation drawing of the three-point supporting anchor integrated liner. Fig. 3 is a perspective view of the three-point supporting anchor integrated liner tied to rebars. A machine is installed with high accuracy via a plate 7 on a machine foundation 114 formed on an on-site slab 1. The machine foundation 114 is formed of a machine foundation reinforced concrete 2 and a foundation grout 116. In the machine foundation reinforced concrete 2, foundation rebars (also referred to as a foundation reinforcement cage) are arranged inside. The foundation rebars enhance the strength of the concrete by combining rebars 3 in a cage shape. The three-point supporting anchor integrated liners 10 of the present invention are mounted to the slab 1 and the machine foundation 114.

The three-point supporting anchor integrated liner 10 of the present invention has one end secured to the slab 1 under the machine foundation reinforced concrete 2 and the other end including a screw portion 13a and a liner portion 13b. The screw portion 13a has a diameter larger than a shaft diameter. The liner portion 13b has an upper surface arranged at the same height as an upper surface of the machine foundation 114, is screwed with the screw portion 13a to form a mounting surface for the plate 7 having an upper surface on which a machine is installed, and allows adjustment of an installation height of the plate 7. The three-point supporting anchor integrated liner 10 includes a first shaft 12, a second shaft 14, and a coupling portion 16. The first shaft 12 is longer than a height difference dimension (α, hereinafter simply referred to as α in some cases) between a horizontal height M of top rebars of the foundation reinforcement cage forming the machine foundation reinforced concrete 2 and a slab top N. The second shaft 14 extends in a direction intersecting with (in Figs. 1 to 3, perpendicular to) the first shaft 12 and allows both ends to intersect with and be tied to the rebars 3. The coupling portion 16 couples the second shaft 14 to the first shaft 12 in a state where the second shaft 14 intersects with the first shaft 12.

The first shaft 12 has a shaft length longer than the height difference dimension (α) between the horizontal height M of the top rebars (top of the rebars 3) of the foundation reinforcement cage forming the machine foundation reinforced concrete 2 and the slab top N (upper surface of the slab 1) (see Fig. 2) and has a metal shaft lower end to be secured to the slab 1 as a post-construction anchor. The first shaft 12 can be secured by burying the lower end into a bore of the slab 1 using an adhesive or concrete wedge hammering method. The first shaft 12 includes the screw portion 13a having a diameter larger than the shaft diameter at an upper end and the liner portion 13b that has an upper surface arranged at the same height as the upper surface of the machine foundation 114, is screwed with the screw portion 13a to form the mounting surface for a plate having an upper surface on which a machine is installed, and can adjust an installation height of the plate. The upper surface of the liner portion 13b is aligned with the upper surface of the machine foundation 114 and becomes a contact surface with the plate 7. The plate 7 is a base plate, a sole plate, a temporary template, or the like. When a machine is small, the machine may be installed directly on the machine foundation 114 without using a plate. The liner portion 13b has four rotation holes (of these, two holes opposed to the center double as resin filling holes) provided on a peripheral surface (side surface) and can adjust the installation position of the plate 7 or the machine by inserting a shaft in the rotation holes to rotate.

The second shaft 14 is a metal rod member extending in the direction intersecting with (in Figs. 1 to 3, perpendicular to) the first shaft 12. The shaft length of the second shaft 14 is a length that allows both ends to intersect and connect with the rebars 3. Positions where the second shaft 14 intersect with the rebars 3 are tied with tying metal fittings, tying bands, wires, and the like, allowing the rebars 3 and an upper portion of the first shaft 12 to be firmly secured relative to the rebars 3. This is a feature of a new construction method. Previously, securing only the lower end of the first shaft 12 made the upper end unstable, and it was determined that it was impossible to decide on and secure a liner surface and a plate or machine contact surface before concrete assembling and pouring. However, the above action made it possible.

The coupling portion 16 is a member that couples the first and second shafts 12 and 14 together in a state where the first and second shafts 12 and 14 intersect and employs tying with wires, a pinching structure with clips or the like, or a screwing structure with nuts. In the coupling portion 16 illustrated in Figs. 1 to 3, two nuts have outer surfaces brought into contact and secured (welded) so that the axial centers of the two nuts are perpendicular to one another. The second shaft 14 is supported by the coupling portion 16 to rotate freely about the axis of the first shaft 12, move up and down along a longitudinal direction of the first shaft 12, and be able to move in a left and right (when the second shaft 14 is perpendicular to the first shaft 12, horizontal) direction with the first shaft 12 as a center. The second shaft 14 may be coupled using the coupling portion 16 in a state where the second shaft 14 intersects with the first shaft 12 at a predetermined angle depending on an installation location, in addition to the direction perpendicular to the first shaft 12. Additionally, a configuration may be used in which a plurality of second shafts 14 are coupled to the first shaft 12 using the coupling portions 16, such as a five-point supporting configuration when two second shafts 14 are used. This allows the long first shaft 12 to be supported at multiple points fixedly relative to the rebars 3 at a plurality of positions along the longitudinal direction, therefore ensuring stability.

The three-point supporting anchor integrated liner 10 having such a configuration can be mounted on the slab 1 before assembling and pouring the machine foundation reinforced concrete 2, in other words, on the slab 1 before assembling and pouring the machine foundation reinforced concrete 2 in a state of three-point supporting in which the lower end of the first shaft 12 is secured to the bore of the slab 1 and both ends of the second shaft 14 are tied and secured to the adjacent rebars 3 with both ends intersecting with the rebars 3. In view of this, while the first shaft 12 becomes unstable by having a wobbling upper end if only the lower end is secured, the first shaft 12 can be mounted in a stable state because it can be secured by allowing both ends of the second shaft 14, to which the other end side of the first shaft 12 is perpendicular, to intersect with and be tied to the adjacent rebars 3. The coupling portion 16 secures both ends of the second shaft 14 at a position close to the screw portion 13a at the upper end of the first shaft 12, in other words, at a position away from the lower end, thereby allowing the three-point supporting anchor integrated liner 10 to be mounted in a more stable state, withstand impact and force that attempts to move when assembling and pouring machine foundation reinforced concrete, and increase installation accuracy of a plate.

### [Centering Nut 40]

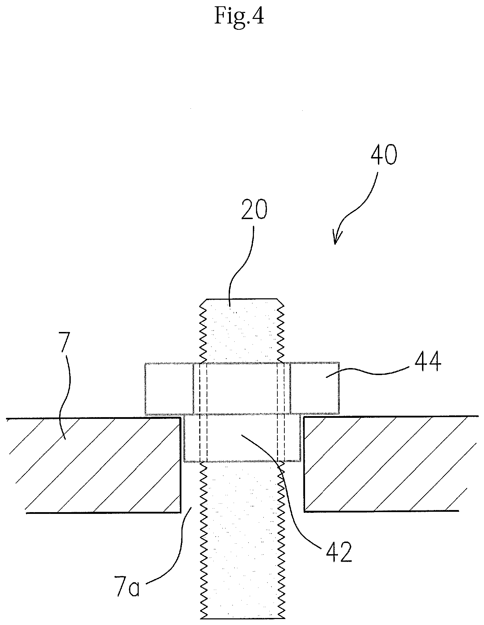

Fig. 4 is an explanatory view of a centering nut. A centering nut 40 is a nut that fits in an anchor bolt mounting hole 7a of the plate 7 or a machine. The centering nut 40 is a nut in which a tubular body 42 that fits in the anchor bolt mounting hole 7a and a head 44 that is larger than a hole diameter of the anchor bolt mounting hole 7a are integrally formed. The tubular body 42 is formed to have an outer diameter a little smaller than the hole diameter of the anchor bolt mounting hole 7a, with a gap of 1 mm or less, preferably 0.5 mm or less when the tubular body 42 is fitted so that a large gap is not generated. The tubular body 42 has an inner side that is a female screw structure with which an anchor bolt 20 can be screwed. The head 44 has a hexagonal shape (and in addition, may have a polygonal shape including a square) and can be fastened or removed with a tool, such as a hexagonal spanner. Since the hole diameter of the anchor bolt mounting hole 7a of the plate 7 or the machine is set to be larger than a shaft diameter of the anchor bolt 20 for fine adjustment of the installation position, the centering nut 40 can be mounted to the anchor bolt mounting hole 7a by matching the shaft center of the anchor bolt 20 to the center of the anchor bolt mounting hole 7a via the centering nut 40 without loosening. In view of this, the X-direction and the Y-direction of the anchor bolt 20 can be aligned with high accuracy without loosening.

The following describes the machine installation method of the present invention according to the above configuration.

### (Example 1: Machine Installation Method (Installation Method in which Box-Out Holes for Anchors are Provided))

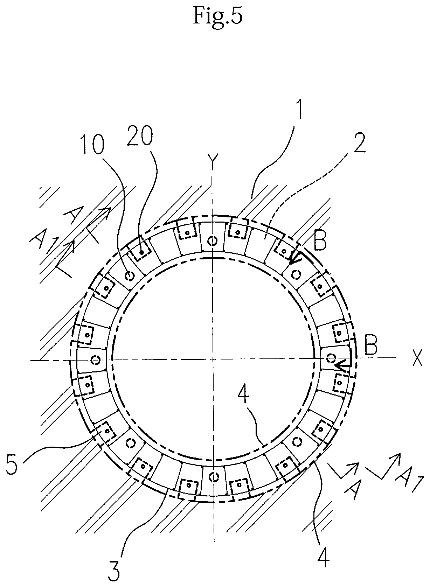

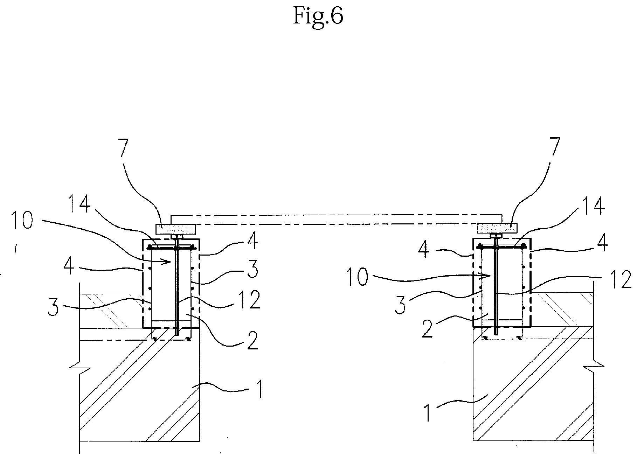

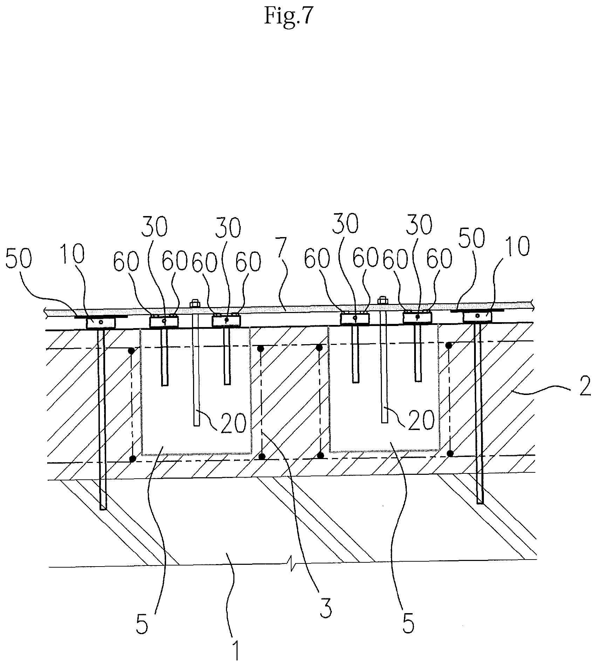

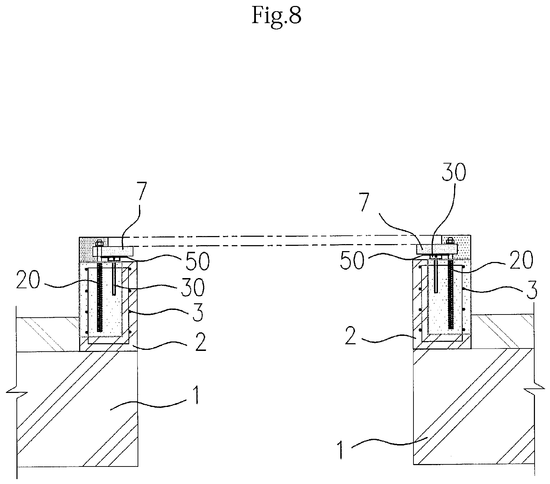

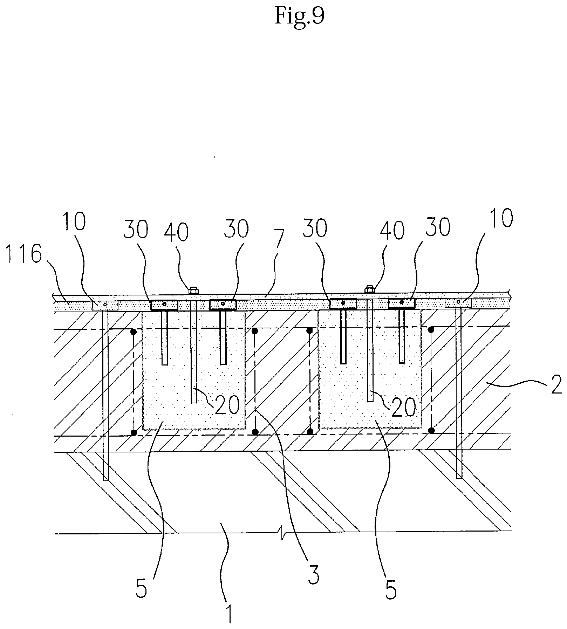

Fig. 5 is a plan view of machine foundation reinforced concrete with box-out holes. Fig. 6 is a cross-sectional view viewed from an arrow direction A-A of Fig. 5 with the box-out holes. Fig. 7 is a side view viewed from an arrow direction B-B of the machine foundation reinforced concrete with the box-out holes (with final centering anchor integrated liners 30). Fig. 8 is a cross-sectional view viewed from an arrow direction A1-A1 of Fig. 5 with concrete poured in the box-out holes (with the final centering anchor integrated liners 30). Fig. 9 is a side view viewed from the arrow direction B-B of Fig. 5 with concrete poured in the box-out holes (with the final centering anchor integrated liners 30).

The machine installation method of Example 1 is a method in which the box-out holes for the anchors are provided similarly to the prior art. When the box-out holes for the anchor bolts are provided, the three-point supporting anchor integrated liner 10 of the present invention is used as a liner for temporary centering (conventional temporary liner). In addition, the short anchor integrated liner 30 having only a first shaft (conventional type) is used as a liner for final centering.

1. Reference lines (the X-direction and the Y-direction) of the machine foundation reinforced concrete 2 are marked on the slab 1. The Z-direction is scribed on nearby walls, pillars, and the like. In addition, X- and Y-reference lines of the anchor bolts 20 positions are marked. The foundation height (Z-direction) is scribed on nearby walls, pillars, and the like. The positions of the three-point supporting anchor integrated liners 10 for temporary centering are scribed (See Fig. 5). The positions of the three-point supporting anchor integrated liners 10 for temporary centering are located away from the box-out holes 5 in which the anchor bolts 20 are arranged, similarly to the mounting positions of the temporary liners of the conventional construction method. At this time, the positions of the rebars 3 for the foundation are scribed so as not to overlap the positions of the three-point supporting anchor integrated liners 10 for temporary centering.
2. The three-point supporting anchor integrated liners 10 for temporary centering are adjusted in length (by setting the length of the first shafts 12 to be α) and secured by burying the lower ends into the bores of the slab 1 using an adhesive or the concrete wedge hammering method.
3. Joint bars (Z-direction) are constructed. Foundation rebars are tied by excavating the rebars of the slab 1, or the rebars 3 are hammered into the slab 1 as post-construction anchors. Bar arrangement of the machine foundation reinforced concrete 2 is performed. Both ends of the second shaft 14 of the three-point supporting anchor integrated liner 10 for temporary centering are adjusted in the X-direction, the Y-direction, and the Z-direction so as to intersect with the rebars 3 by moving the second shaft 14 and the coupling portions 16. Then, the intersecting positions are tied and secured to perform three-point supporting (see Figs. 3 and 6). The three-point supporting anchor integrated liner 10 can be supported at a total of three points, which include one point secured by the slab and two points secured by two positions with the foundation reinforcement cage. Formworks 4 are mounted.
4. The plate 7 is arranged on the three-point supporting anchor integrated liners 10 for temporary centering (see Fig. 6). The anchor bolts 20 are mounted so as to dangle through the anchor bolt mounting holes 7a of the plate 7 (see Fig. 7). The box-out holes 5 are created so as to surround the anchor bolts 20. In a state where the anchor bolts 20 and the anchor integrated liners 30 are removed, the box-out holes are created.
5. The machine foundation reinforced concrete 2 is assembled and poured. Curing is allowed for 28 days until the concrete solidifies. The formworks 4 are disassembled and removed to create anchor box-out hole spaces.
6. A slide paper 50 (two pieces) is laid on the upper surface of the three-point supporting anchor integrated liner 10 for temporary centering (see Fig. 7). Primary centering of a plate 7 is performed. The primary centering is performed by adjusting the liner portions 13b of the three-point supporting anchor integrated liners 10 for temporary centering. At this time, the slide paper 50 greatly reduces sliding resistance, facilitating adjustment work for the centering of a heavy object. After the centering, the three-point supporting anchor integrated liners 10 for temporary centering are lowered one by one to remove the slide paper and placed back in place.

The centering nut 40 is inserted into the anchor bolt mounting hole 7a of the plate 7. The anchor bolt 20 is inserted into and secured to the centering nut 40. This can minimize the gap in the anchor bolt mounting hole, enabling accurate mounting of the anchor bolt in the X- and Y-directions.

Two final centering anchor integrated liners 30 are placed at both sides near the anchor bolt 20. The final centering anchor integrated liner 30 is secured to a back surface of the plate 7 with magnets 60. In the space of the box-out hole 5, by a simple action of attaching the magnets to the back surface (made of iron) of the plate 7 or the machine, the conventional anchor integrated liner 30 can be easily secured there. As the final centering anchor integrated liner 30, the liner disclosed in Japanese Patent No. 4065957, which is the application previously filed before this application, is used.

7. The box-out holes 5 are filled with concrete. Curing is allowed for 28 days until the concrete solidifies. The anchor bolts 20 are secured. The final centering anchor integrated liners 30 are also secured. The magnets on the final centering anchor integrated liner 30 are removed, and the slide paper 50 (two pieces) is laid on the upper surface (see Fig. 8).
8. A pump is installed. Secondary centering is performed. The final centering anchor integrated liners 30 are adjusted. The final centering anchor integrated liners 30 are lowered one by one to remove the slide paper and placed back in place. After final check of the centering, resin is injected into an inside through an opening of the liner portion 13b for securing. This does not cause the liner portion 13b to rotate due to vibration and the like, and the installation accuracy can be ensured.
9. Grouting is performed to form the foundation grout 116. The lower surface and the peripheral area of a pump base (sole plate) are secured with concrete or mortar. A mortar finish is applied around the foundation.

With the machine installation method of Example 1, the plate or the machine, the anchor bolts, and the three-point supporting anchor integrated liners for temporary centering can be placed before assembling and pouring the machine foundation reinforced concrete, and the process can be significantly shortened.

### (Example 2: Machine Installation Method (Installation Method without Providing Box-Out Holes for Anchors))

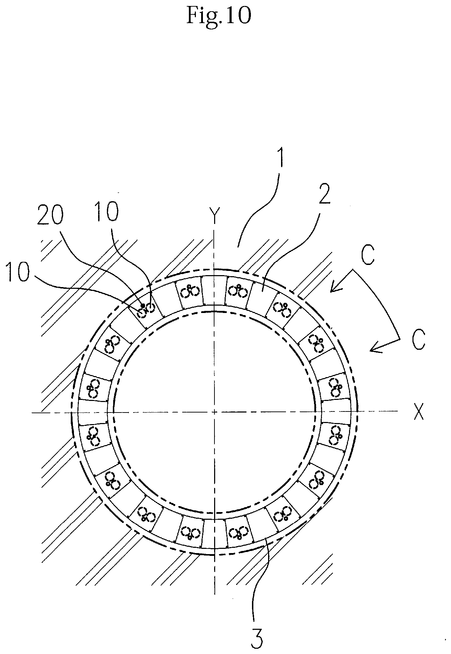

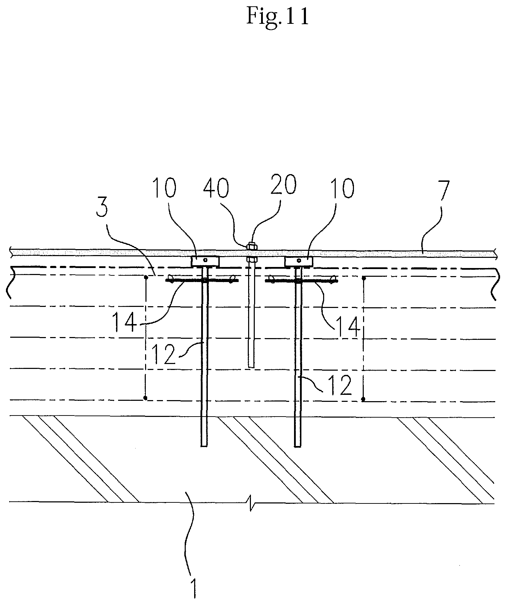

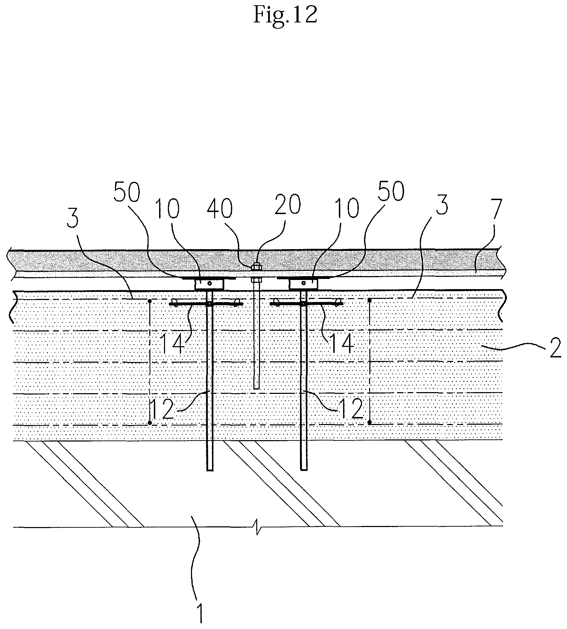

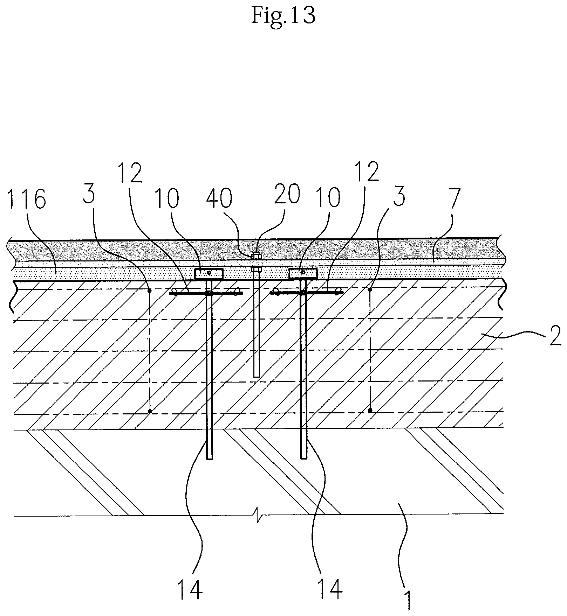

Fig. 10 is a plan view of machine foundation reinforced concrete without box-out holes. Fig. 11 is a side view viewed from an arrow direction C-C of Fig. 10 before the machine foundation concrete is poured. Fig. 12 is a side view viewed from the arrow direction C-C of Fig. 10 after the foundation concrete is poured. Fig. 13 is a side view viewed from the arrow direction C-C of Fig. 10 after foundation grouting. When the box-out holes for anchor bolts are not provided, the temporary liners of the conventional construction method are not used. The three-point supporting anchor integrated liner 10 of the present invention is used as a liner for final centering.
1. Reference lines (the X-direction and the Y-direction) of the machine foundation reinforced concrete 2 are marked on the slab 1. The Z-direction is scribed on nearby walls, pillars, and the like. X- and Y-reference lines of the anchor bolts 20 positions are marked. The foundation height (Z-direction) is scribed on nearby walls, pillars, and the like (see Fig. 10).
2. Two three-point supporting anchor integrated liners 10 for final centering are mounted at both sides with the scribed position of the anchor bolt 20 as a center. At this time, the length of the first shaft 12 of the anchor integrated liner 10 is adjusted to be α (see Fig. 11).
3. Joint bars (the X-direction and the Y-direction) are constructed. Foundation rebars are tied by excavating the rebars of the slab 1, or rebars are hammered into the slab as post-construction anchors. Bar arrangement is performed. Both ends of the second shaft 14 of the three-point supporting anchor integrated liner 10 for final centering are adjusted in the X-direction, the Y-direction, and the Z-direction so as to intersect with the rebars 3. Then, the intersecting positions are tied and secured to perform three-point supporting. Formworks are mounted.
4. The plate 7 is arranged on the three-point supporting anchor integrated liners 10 for final centering.

The centering nut 40 is inserted into the anchor bolt mounting hole 7a of the plate 7. The anchor bolt 20 is inserted into the centering nut 40. This can minimize the gap in the anchor bolt mounting hole, enabling accurate mounting of the anchor bolt in the X- and Y-directions.

5. The machine foundation reinforced concrete is assembled and poured to a grout position level. Curing is allowed for 28 days until the concrete solidifies.
6. The slide paper 50 (two pieces) is laid on the upper surface of the three-point supporting anchor integrated liner 10 for final centering (see Fig. 12). Primary centering of the plate 7 is performed. At this time, the slide paper 50 greatly reduces sliding resistance, facilitating adjustment work for the primary centering of a heavy object. The primary centering is performed by adjusting the liner portions 13b of the three-point supporting anchor integrated liners 10 for final centering. Scribing of anchor bolts 20 is completed. The primary centering of the three-point supporting anchor integrated liners 10 for final centering is completed.
7. A pump is installed. Secondary centering is performed. The three-point supporting anchor integrated liners 10 for final centering are adjusted. The slide paper 50 greatly reduces sliding resistance, facilitating adjustment work for the centering of a heavy object. In addition, since the secondary centering work can be conducted with the same three-point supporting anchor integrated liners 10, conventional complicated shim adjustment work using several types of shim plates is no longer required, enabling efficient work in a short period. The three-point supporting anchor integrated liners 10 for final centering are lowered one by one to remove the slide paper and placed back in place. After final check of the centering, resin is injected into an inside through an opening of the liner portion 13b for securing. This does not cause the liner portion 13b to rotate due to vibration and the like, and the installation accuracy can be ensured.
8. Grouting is performed to form the foundation grout 116. The lower surface and the peripheral area of a pump base (sole plate) are secured with concrete or mortar. A mortar finish is applied around the foundation (see Fig. 13).

With the machine installation method of Example 2, the plate or the machine, the anchor bolts, and the anchor integrated liners for final centering can be placed before assembling and pouring the machine foundation reinforced concrete, the step of forming the box-out holes can be excluded, and further, the operation of filling the box-out holes with concrete can be omitted. Therefore, the process can be significantly shortened. It is not necessary to provide the box-out holes by the conventional construction method, and significant shortening of the process can be achieved.

While a method for installing a base on machine foundation reinforced concrete has been described, other than the above, the present invention is also applicable to a case where a small machine is directly installed on the machine foundation reinforced concrete without using a base.

In addition, the present invention is applicable to every construction in which anchor bolts are buried and placed in machine foundation reinforced concrete.

### [Modification: Long Anchor Integrated Liner 70]

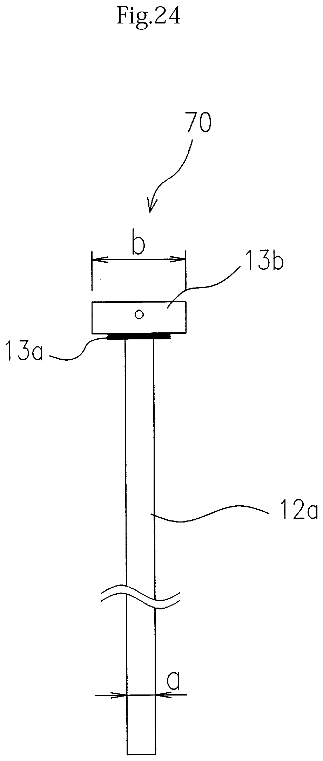

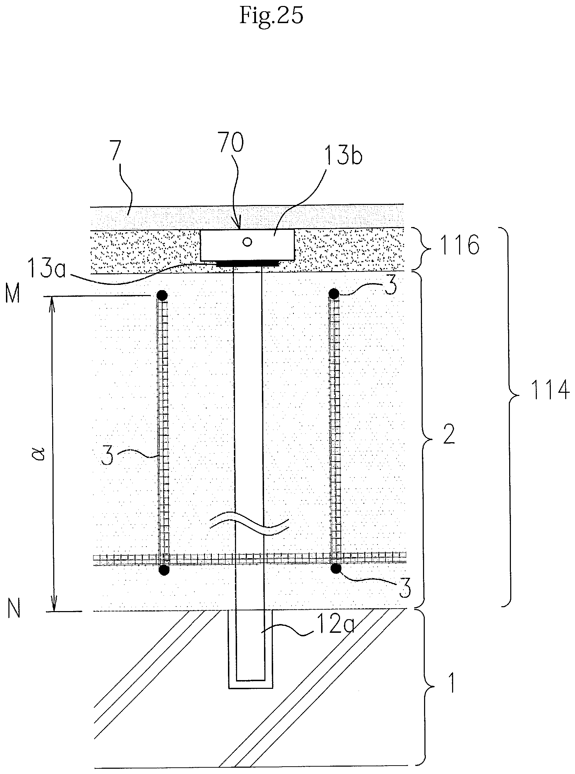

Fig. 24 is a front view of a long anchor integrated liner of the present invention. Fig. 25 is an installation drawing of the long anchor integrated liner.

The long anchor integrated liner 70 has one end secured to a slab 1 under a machine foundation reinforced concrete 2 and the other end including a screw portion 13a and a liner portion 13b. The screw portion 13a projects to the upper surface of the machine foundation reinforced concrete 2. The liner portion 13b is screwed with the screw portion 13a to form a mounting surface for a plate 7 having an upper surface on which a machine is installed or for the machine, and allows adjustment of an installation height of the plate 7 or the machine. The long anchor integrated liner 70 includes a metallic first shaft 12a that is longer than a height difference dimension between top rebars of a foundation reinforcement cage buried in the machine foundation reinforced concrete 2 and a slab top and has a shaft diameter of 24% or more of a diameter b of the liner portion 13b.

Similarly to the three-point supporting anchor integrated liner 10, the first shaft 12a is formed to be longer than the height difference dimension (α) between the top rebars M of the foundation reinforcement cage buried in the machine foundation reinforced concrete 2 and the slab top N. Then, a shaft diameter ***a*** is set to be 24% or more of the diameter b of the liner portion 13b (see Fig. 24). The long anchor integrated liner 70 has a thick shaft diameter, in other words, a thick shaft (large diameter). Therefore, even though the long anchor integrated liner 70 is long, when the long anchor integrated liner 70 is secured by burying the lower end of the first shaft 12a into the bore of the slab 1 using an adhesive or the concrete wedge hammering method, the plate 7 or the machine can be installed on the upper surface of the liner portion 13b in a stable state without causing the liner portion 13b side to swing compared with the three-point supporting anchor integrated liner 10 having a thin shaft diameter.

Accordingly, similarly to the three-point supporting anchor integrated liner 10, the plate or the machine can be arranged, and the anchor bolts can be positioned before assembling and pouring the machine foundation reinforced concrete, and therefore, the process of machine installation can be significantly shortened.

The machine installation method using the long anchor integrated liners 70 is a machine installation method in which the machine foundation reinforced concrete 2 is assembled and poured on the slab 1, and the machine is installed to the machine accessory anchor bolts 20 buried in the machine foundation reinforced concrete 2. In the case with box-out holes, the machine installation method has a step of securing the first shafts 12a of the long anchor integrated liners 70 for temporary centering at positions away from the box-out holes 5, in which the anchor bolts 20 are arranged, in the slab 1 before assembling and pouring the machine foundation reinforced concrete 2, a step of arranging the plate 7 or the machine on liners of the long anchor integrated liners 70 and temporarily mounting the anchor bolts 20 in the box-out hole spaces for centering, a step of mounting the box-out holes 5 so as to surround the anchor bolts 20, a step of assembling and pouring the machine foundation reinforced concrete 2 on the slab 1, and a step of performing primary centering of the plate 7 or the machine with the liner portions 13b of the long anchor integrated liners 70.

The machine installation method using the long anchor integrated liners 70 is a method in which the machine foundation reinforced concrete 2 is assembled and poured on the slab 1, and a machine is installed to the machine accessory anchor bolts 20 buried in the machine foundation reinforced concrete 2. In the case without box-out holes, the machine installation method has a step of securing the first shafts 12a of the long anchor integrated liners 70 for final centering near the installation positions of the anchor bolts 20 in the slab 1 before assembling and pouring the machine foundation reinforced concrete 2, a step of arranging the plate 7 or the machine on the liners of the long anchor integrated liners 70 and mounting the anchor bolts 20, a step of assembling and pouring the machine foundation reinforced concrete 2 on the slab 1 to bury the anchor bolts 20 and the long anchor integrated liners 70, and a step of performing primary centering and secondary centering of the plate 7 with the liner portions 13b of the long anchor integrated liners 70.

Similarly to the three-point supporting anchor integrated liner 10, the long anchor integrated liner 70 is applicable to the machine installation method with or without box-out holes (Examples 1 and 2 above). In addition, the step of tying the second shaft 14 of the three-point supporting anchor integrated liner 10 to the rebars 3 can be omitted, thereby shortening the work period.

The preferred embodiments of the present invention have been described above. However, the present invention is not limited to the embodiments, and various changes are possible within the scope of not departing from the spirit of the present invention.

In addition, the present invention can be implemented by various combinations without being limited to the combinations indicated in the embodiments.

### INDUSTRIAL APPLICABILITY

The present invention is applicable to machinery and equipment installed on machine foundation reinforced concrete, work to erect steel towers on leveling concrete or slabs, construction work to erect steel frames or columns on leveling concrete or slabs, bridge construction, road construction, electrical work to install electrical equipment, and dam construction.

### DESCRIPTION OF REFERENCE SIGNS

1... slab
2... machine foundation reinforced concrete
3... rebar
4... formwork
5... box-out hole
6... temporary liner
7... plate
8... permanent liner
10... three-point supporting anchor integrated liner
12, 12a... first shaft
13a... screw portion
13b... liner portion
14... second shaft
16... coupling portion
20... anchor bolt
30... final centering anchor integrated liner (conventional type)
40... centering nut
50... slide paper
60... magnet
70... long anchor integrated liner
100... large-sized lifting pump
102... pump body
104... discharge pipe
106... lifting pipe
108... impeller
110... water tank
112... opening
114... machine foundation
116... foundation grout
118... mortar finish

## Claims

1. A three-point supporting anchor integrated liner having one end secured to a slab under machine foundation reinforced concrete and another end including a screw portion and a liner portion, the screw portion having a diameter larger than a shaft diameter and projecting to an upper surface of the machine foundation reinforced concrete, the liner portion being screwed with the screw portion to form a mounting surface for a plate having an upper surface on which a machine is installed or for the machine and allowing adjustment of an installation height of the plate or the machine, the three-point supporting anchor integrated liner comprising:
a first shaft that is longer than a height difference dimension between a top rebar of a foundation reinforcement cage buried in the machine foundation reinforced concrete and a slab top;
a second shaft that extends in a direction intersecting with the first shaft and allows both ends to intersect with and be tied to the foundation reinforcement cage; and
a coupling portion that couples the second shaft to the first shaft in a state where the second shaft intersects with the first shaft.

2. The three-point supporting anchor integrated liner according to claim 1, wherein
one or more of the second shafts are mounted to the first shaft and supported by the coupling portion to move up and down along a longitudinal direction of the first shaft and be able to move in a left and right direction with the first shaft as a center.

3. A machine installation method for assembling and pouring machine foundation reinforced concrete on a slab to install a machine to a machine accessory anchor bolt buried in the machine foundation reinforced concrete, the machine installation method comprising:
a step of securing the first shaft of the three-point supporting anchor integrated liner according to claim 1 or 2 for temporary centering at a position away from a box-out hole, the anchor bolt being arranged in the box-out hole, the anchor bolt being in the slab before assembling and pouring the machine foundation reinforced concrete;
a step of allowing both ends of the second shaft to intersect with and be tied to a rebar of the machine foundation reinforced concrete;
a step of arranging a plate or the machine on a liner of the three-point supporting anchor integrated liner and temporarily mounting the anchor bolt in a box-out hole space for centering;
a step of mounting a box-out hole so as to surround the anchor bolt;
a step of assembling and pouring the machine foundation reinforced concrete on the slab; and
a step of performing primary centering of the plate or the machine with the liner portion of the three-point supporting anchor integrated liner.

4. A machine installation method for assembling and pouring machine foundation reinforced concrete on a slab to install a machine to a machine accessory anchor bolt buried in the machine foundation reinforced concrete, the machine installation method comprising:
a step of securing the first shaft of the three-point supporting anchor integrated liner according to claim 1 or 2 for final centering near an installation position of the anchor bolt in the slab before assembling and pouring the machine foundation reinforced concrete;
a step of allowing both ends of the second shaft to intersect with and be tied to a rebar of the machine foundation reinforced concrete;
a step of arranging the plate or the machine on a liner of the three-point supporting anchor integrated liner and mounting the anchor bolt;
a step of assembling and pouring the machine foundation reinforced concrete on the slab and burying the anchor bolt and the three-point supporting anchor integrated liner; and
a step of performing primary centering and secondary centering of the plate or the machine with the liner portion of the three-point supporting anchor integrated liner.

5. The machine installation method according to claim 3 or 4, comprising
a step of fitting and mounting a centering nut when the anchor bolt is mounted to an anchor bolt mounting hole of the plate, the centering nut having an outer diameter with a gap relative to a hole diameter of the anchor bolt mounting hole of 1 mm or less.

6. The machine installation method according to claim 3, comprising
a step of mounting a final centering anchor integrated liner on a lower surface of the plate or the machine with a magnet at both sides of the anchor bolt mounted in the box-out hole space.

7. The machine installation method according to claim 4 or 6, comprising
a step of arranging slide paper between a surface of the liner portion of the three-point supporting anchor integrated liner or the final centering anchor integrated liner and the plate or the machine and performing primary or secondary centering of the machine mounted on the plate or the machine with the liner portion.

8. A long anchor integrated liner having one end secured to a slab under machine foundation reinforced concrete and another end including a screw portion and a liner portion, the screw portion projecting to an upper surface of the machine foundation reinforced concrete, the liner portion being screwed with the screw portion to form a mounting surface for a plate having an upper surface on which a machine is installed or for the machine and allowing adjustment of an installation height of the plate or the machine, the long anchor integrated liner comprising
a first shaft longer than a height difference dimension between a top rebar of a foundation reinforcement cage buried in the machine foundation reinforced concrete and a slab top, the first shaft having a shaft diameter of 24% or more of a diameter of the liner portion.
